(19) Europäisches Patentamt / European Patent Office / Office européen des brevets

(11) **EP 4 679 297 A1**

(12) **EUROPEAN PATENT APPLICATION**

(43) Date of publication:
**14.01.2026   Bulletin 2026/03**

(21) Application number: **24210469.3**

(22) Date of filing: **04.11.2024**

(51) International Patent Classification (IPC):
*G06F 17/14* (2006.01)

(52) Cooperative Patent Classification (CPC):
**G06F 17/142**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **08.07.2024   KR 20240089663**
**11.09.2024   KR 20240124176**

(71) Applicant: **Seoul National University R & DB Foundation**
**Seoul 08826 (KR)**

(72) Inventors:
• **KANG, U**
  **Seoul 08826 (KR)**
• **PARK, Yong-chan**
  **Seoul 08826 (KR)**
• **KIM, Jongjin**
  **Seoul 08826 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **FAST MULTIDIMENSIONAL PARTIAL FOURIER TRANSFORM METHOD AND APPARATUS CAPABLE OF SUPPORTING AUTOMATIC HYPERPARAMETER SELECTION**

(57)   Proposed are a fast multidimensional partial Fourier transform method and apparatus. According to an aspect of the present invention, there is provided a fast multidimensional partial Fourier transform method, the fast multidimensional partial Fourier transform method being performed by a fast multidimensional partial Fourier transform apparatus, the fast multidimensional partial Fourier transform method including: setting a plurality of hyperparameters used in partial Fourier transform based on constraints on the tolerance and degree of the polynomial for polynomial approximation; and approximating and computing the multidimensional Fourier coefficients of a partial Fourier transform for multidimensional data based on the plurality of hyperparameters.

EP 4 679 297 A1

```
                    ┌─────────────┐
                    │    START    │
                    └──────┬──────┘
                           │                        S610
            ┌──────────────▼──────────────────────┐
            │   SET PLURALITY OF HYPERPARAMETERS   │
            └──────────────┬──────────────────────┘
                           │                        S620
            ┌──────────────▼──────────────────────┐
            │  APPROXIMATE AND COMPUTE MULTIDIMENSIONAL │
            │  FOURIER COEFFICIENTS OF PARTIAL FOURIER TRANSFORM │
            │  FOR MULTIDIMENSIONAL DATA BASED ON PLURALITY OF │
            │  HYPERPARAMETERS                     │
            └──────────────┬──────────────────────┘
                           │
                    ┌──────▼──────┐
                    │     END     │
                    └─────────────┘
```

FIG. 6

**Description**

BACKGROUND

1. Technical Field

The embodiments disclosed herein relate to a fast multidimensional partial Fourier transform method and apparatus, and more particularly, to a fast multidimensional partial Fourier transform method and apparatus that rapidly compute a part of Fourier coefficients for multidimensional data while maintaining accuracy by utilizing polynomial approximation.

The embodiments disclosed herein were derived as a result of the research on the task "High-Performance Irregular Tensor Analysis for Time-Series Multi-Way Data Mining" (task management number: NRF-2022R1A2C3007921) of the Individual Fundamental Research Project that was sponsored by the Korean Ministry of Science and ICT and the National Research Foundation of Korea.

The embodiments disclosed herein were derived as a result of the research on the task "Flexible and Efficient Model Compression Method for Various Applications and Environments" (task management number: IITP-2020-0-00894) of the SW Computing Industry Fundamental Technology Development Project that was sponsored by the Korean Ministry of Science and ICT and the Institute of Information & Communications Technology Planning & Evaluation.

The embodiments disclosed herein were derived as a result of the research on the task "Artificial Intelligence Graduate School Program (Seoul National University)" (task management number: IITP-2021-0-01343) and the task "Artificial Intelligence Innovation Hub" (task management number: IITP-2021-0-02068) of the Information, Communications and Broadcasting Innovative Talent Nurturing Project that were sponsored by the Korean Ministry of Science and ICT and the Institute of Information & Communications Technology Planning & Evaluation.

2. Description of the Related Art

Fourier transform (FT) is transformation that decomposes an input signal into various frequency components, and is represented by the sum of periodic functions.

Discrete Fourier transform (DFT), which is used to apply Fourier transform to digital signal processing, is a core algorithm in various data mining tasks, including anomaly detection, latent pattern extraction, and image processing. The discrete Fourier transform computes the discrete Fourier coefficients of input data and uses them as the core characteristics of the data.

The algorithm that is most commonly used to derive discrete Fourier coefficients is fast Fourier transform (FFT). Fast Fourier transform uses an inefficient method of deriving all Fourier coefficients, selecting only some necessary coefficients, and discarding the rest.

Partial Fourier transform (PFT), which was introduced to solve this problem of inefficiency, is an algorithm that computes only a part of the discrete Fourier coefficients of data and efficiently analyzes the characteristics of the data.

Conventional partial Fourier transform has a limitation that it is useful only when the number of Fourier coefficients to be computed is considerably small compared to the size of input data. In particular, the conventional partial Fourier transform takes into consideration neither the input of multidimensional data and nor how to optimize a computation process for a part of Fourier coefficients for multidimensional data.

For reference, patent document 1 is an invention regarding an efficient implementation method for multidimensional fast Fourier transform, patent document 2 is an invention regarding a fast partial Fourier transform method, and patent document 3 is an invention regarding a variable fast Fourier transform apparatus. Patent documents 1 to 3 only disclose general contents regarding the operations of fast Fourier transform, and do not provide a fast partial Fourier transform technology for multidimensional data.

[Related Art Literature]

[Patent Literature]

Patent document 1: Korean Patent No. 10-0592753 (published on June, 26, 2006)
Patent document 2: Korean Patent No. 10-2514264 (published on March 24, 2023)
Patent document 3: Korean Patent No. 10-1297085 (published on August 19, 2013)

[Non-Patent Literature]

Non-patent document 1: The paper by Yong-chan Park et al. on Fast Partial Fourier Transform, 28 Aug 2020 (https://arxiv.org/abs/2008.12559)

SUMMARY

An object of the embodiments disclosed herein is to provide a fast multidimensional partial Fourier transform method and apparatus that automatically select hyperparameters used in the polynomial approximation of Fourier transform and rapidly compute a part of Fourier coefficients for multidimensional data while maintaining accuracy by utilizing polynomial approximation.

Other objects and advantages of the present invention may be understood from the following description, and will be more clearly understood from embodiments. In addition, it will be readily understood that the objects and advantages of the present invention may be realized by the means described in the attached claims and combinations thereof.

According to an aspect of the present invention, there is provided a fast multidimensional partial Fourier transform method, the fast multidimensional partial Fourier transform method being performed by a fast multidimensional partial Fourier transform apparatus, the fast multidimensional partial Fourier transform method including: setting a plurality of hyperparameters used in partial Fourier transform based on constraints on the tolerance and degree of the polynomial for polynomial approximation; and approximating and computing the multidimensional Fourier coefficients of a partial Fourier transform for multidimensional data based on the plurality of hyperparameters.

According to another aspect of the present invention, there is provided a fast multidimensional partial Fourier transform apparatus, including a controller configured to set a plurality of hyperparameters used in partial Fourier transform based on constraints on the tolerance and degree of the polynomial for polynomial approximation and approximate and compute the multidimensional Fourier coefficients of a partial Fourier transform for multidimensional data based on the plurality of hyperparameters.

According to still another aspect of the present invention, there is provided a non-transitory computer-readable storage medium having stored thereon a program that, when executed by a processor, causes the processor to execute a fast multidimensional partial Fourier transform method, wherein the fast multidimensional partial Fourier transform method includes: setting a plurality of hyperparameters used in partial Fourier transform based on constraints on the tolerance and degree of the polynomial for polynomial approximation; and approximating and computing the multidimensional Fourier coefficients of a partial Fourier transform for multidimensional data based on the plurality of hyperparameters.

According to still another aspect of the present invention, there is provided a computer program that is executed by a fast multidimensional partial Fourier transform apparatus and stored in a non-transitory computer-readable storage medium to perform a fast multidimensional partial Fourier transform method, wherein the fast multidimensional partial Fourier transform method includes: setting a plurality of hyperparameters used in partial Fourier transform based on constraints on the tolerance and degree of the polynomial for polynomial approximation; and approximating and computing the multidimensional Fourier coefficients of a partial Fourier transform for multidimensional data based on the plurality of hyperparameters.

According to some of the above-described solutions, there are proposed the fast multidimensional partial Fourier transform method and apparatus that approximate the trigonometric factors of multidimensional data through multivariate polynomial approximation and efficiently compute a part of the Fourier coefficients of multidimensional data using tensor conversion and tensor multiplication when processing the multidimensional data.

Furthermore, according to some of the above-described solutions, there are proposed the fast multidimensional partial Fourier transform method and apparatus that enable the explicit reconstruction of complex constraints through polynomial approximation and automatically select optimal hyperparameters using unconstrained convex optimization even when the sizes of input and output for multidimensional data processing change.

The advantages that can be achieved by the embodiments disclosed herein are not limited to the advantages described above, and other advantages not described above will be clearly understood by those having ordinary skill in the art, to which the embodiments disclosed herein pertain, from the foregoing description.

BRIEF DESCRIPTION OF THE DRAWINGS

The above and other objects, features, and advantages of the present invention will be more clearly understood from the following detailed description taken in conjunction with the accompanying drawings, in which:

FIG. 1 is a view illustrating input images and Fourier maps for the input images;
FIG. 2 is a diagram illustrating a method by which a conventional partial Fourier transform apparatus processes two-dimensional input and a method by which a fast multidimensional partial Fourier transform apparatus according to an embodiment processes two-dimensional input;

FIG. 3 is a block diagram illustrating the functional configuration of a fast multidimensional partial Fourier transform apparatus according to an embodiment;

FIG. 4 is a flowchart illustrating the overall operation of a fast multidimensional partial Fourier transform apparatus according to an embodiment;

FIG. 5 is a diagram illustrating a tensor transformed by a fast multidimensional partial Fourier transform apparatus according to an embodiment; and

FIGS. 6 to 8 are flowcharts showing a fast multidimensional partial Fourier transform method according to an embodiment.

## DETAILED DESCRIPTION

Various embodiments will be described in detail below with reference to the accompanying drawings. The following embodiments may be modified to various different forms and then practiced. In order to more clearly illustrate features of the embodiments, detailed descriptions of items that are well known to those having ordinary skill in the art to which the following embodiments pertain will be omitted. Furthermore, in the drawings, portions unrelated to descriptions of the embodiments will be omitted. Throughout the specification, like reference symbols will be assigned to like portions.

Throughout the specification, when one component is described as being "connected" to another component, this includes not only a case where the one component is 'directly connected' to the other component but also a case where the one component is 'connected to the other component with a third component arranged therebetween.' Furthermore, when one portion is described as "including" one component, this does not mean that the portion does not exclude another component but means that the portion may further include another component, unless explicitly described to the contrary.

Some of the terms used herein will be described first.

The term "hyperparameter" refers to a parameter that sets the details required to derive polynomial approximation for approximating the multidimensional Fourier coefficients of a partial Fourier transform for multidimensional data.

The term "tensor" refers to a data type that represents a multidimensional array. Tensor data can be used to represent and compute various types of data such as text, images, sound, and video on a computer. There are various methods of representing a tensor on a computer, and a representative method includes a rank representative of a dimension, a shape representative of the number of elements corresponding to each dimension, and a data type regarding a value. For example, 0-dimensional data can be classified as a zero-dimensional tensor or scalar, an array of one-dimensional data can be classified as a one-dimensional tensor or vector, an array of two-dimensional data can be classified as a two-dimensional tensor or matrix, and an array of three or more-dimensional data can be classified as a multidimensional tensor or N-dimensional tensor. Multiple tensors may be subjected to mutually operations for data processing.

Embodiments will be described in detail below with reference to the accompanying drawings.

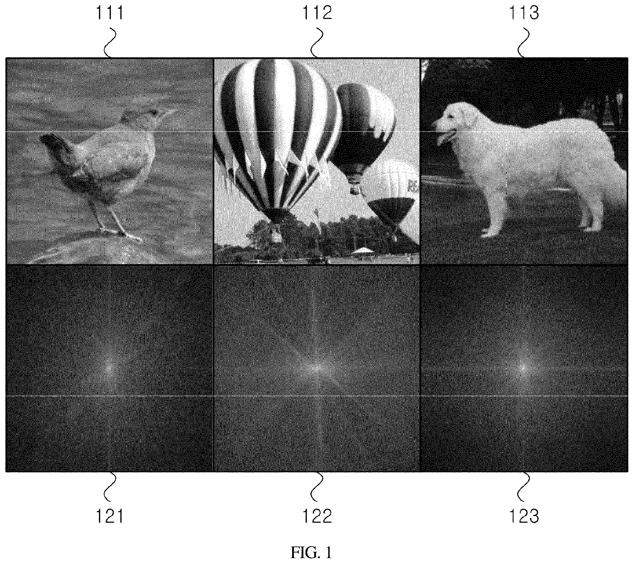

FIG. 1 is a view illustrating input images and Fourier maps for the input images.

The plurality of Fourier maps 121, 122, and 123 shown in FIG. 1 visualize Fourier coefficients for the plurality of input images 111, 112, and 113, and are maps in which the Fourier coefficients are represented by log amplitudes. In the plurality of Fourier maps 121, 122, and 123, except for the low-frequency portion at the center, the Fourier coefficients are mostly close to 0. This indicates that computational efficiency may be obtained by focusing only on the part of non-zero coefficients and skipping the computation of unnecessary coefficients. Most real data, such as time-series data, an image, and a video, have highly compact representations in the frequency domain. It is necessary to efficiently compute only a part of Fourier coefficients by utilizing the energy compaction property of data.

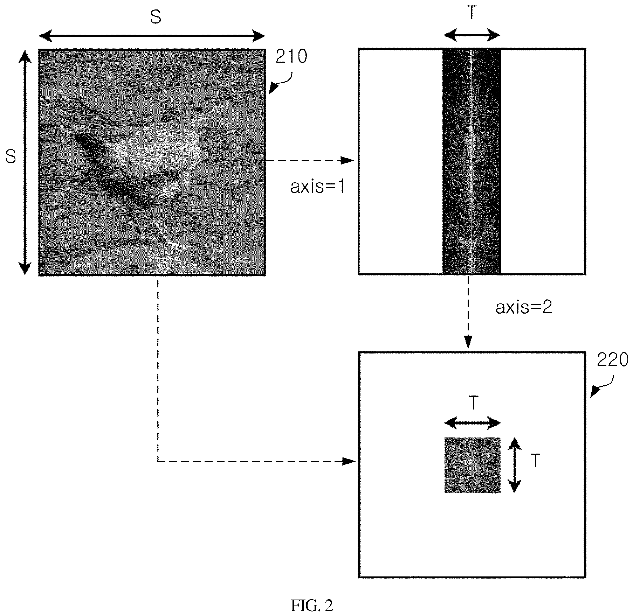

FIG. 2 is a diagram illustrating a method by which a conventional partial Fourier transform apparatus processes two-dimensional input and a method by which a fast multidimensional partial Fourier transform apparatus according to an embodiment processes two-dimensional input.

Non-patent document 1 discloses a conventional partial Fourier transform algorithm, which reduces the time complexity to $O(N + MlogM)$ by using polynomial approximation. In this case, $N$ is an input size and $M$ is an output area size.

The conventional partial Fourier transform algorithm disclosed in non-patent document 1 has two disadvantages:

First, the conventional partial Fourier transform algorithm disclosed in non-patent document 1 is specifically designed for one-dimensional input, and thus, is less effective when applied to multidimensional data. For example, assuming that $T{\times}T$ low-frequency coefficients 220 are computed for two-dimensional input 210 with a size of $S{\times}S$ as shown in FIG. 2, the technology disclosed in non-patent document 1 operates in a manner that applies multiple one-dimensional partial Fourier transforms to each dimension, so that costs of $S{\cdot}(S+TlogT)+T{\cdot}(S+TlogT) \sim S^2+STlogT$ are required. In contrast, the fast multidimensional partial Fourier transform apparatus according to the embodiment applies a partial Fourier transform to the overall input once, so that costs of $S^2+T^2logT^2 - S^2+T^2logT$ are required. In

this case, T<<S, so that the fast multidimensional partial Fourier transform apparatus according to the embodiment has a significant computational advantage over the conventional partial Fourier transform algorithm in terms of multidimensional data processing.

Second, the conventional partial Fourier transform algorithm disclosed in non-patent document 1 relies on manual hyperparameter search. Given input with size *N,* a user needs to manually select an appropriate divisor for *N* in order to use the conventional partial Fourier transform algorithm according to non-patent document 1. Since the overall performance of the conventional partial Fourier transform algorithm varies significantly depending on the value of the divisor, it is important to select an optimal divisor whenever the size of input or output changes. However, the conventional partial Fourier transform algorithm does not provide an option to automatically find an optimal value, so that in the worst case, a user needs to undergo trial and error for all divisors. When the input is multidimensional, the situation is even worse because the search space for hyperparameters grows exponentially with the dimension. The fast multidimensional partial Fourier transform apparatus according to the embodiment may automatically find the optimal value of the divisor using a convex optimization-based algorithm, thereby significantly reducing the costs attributable to the hyperparameter search.

To overcome these problems, the fast multidimensional partial Fourier transform apparatus according to the present embodiment automatically selects hyperparameters and efficiently and accurately computes some of the Fourier coefficients for multidimensional data based on the automatically selected hyperparameters. The fast multidimensional partial Fourier transform apparatus according to the present embodiment performs two major operations below:

First, the fast multidimensional partial Fourier transform apparatus according to the present embodiment computes partial Fourier coefficients using a pre-computation technique through the multivariate polynomial approximation of trigonometric functions. The fast multidimensional partial Fourier transform apparatus approximates a set of trigonometric factors of a partial Fourier transform using a multivariate polynomial. The fast multidimensional partial Fourier transform apparatus decomposes a partial Fourier transform into small sub-blocks and approximates some trigonometric functions using Chebyshev polynomials to reduce computational costs.

The fast multidimensional partial Fourier transform apparatus according to the present embodiment efficiently computes partial Fourier coefficients by utilizing batch matrix multiplication and fast Fourier transform algorithms optimized for multidimensional data types. The fast multidimensional partial Fourier transform apparatus finds a set of smooth twiddle factors in the multidimensional partial Fourier transform using the Cooley-Tukey algorithm. Then, the twiddle factors are approximated using a multivariate polynomial. This may considerably reduce the time cost by decomposing the computation of partial Fourier coefficients into matrix multiplication and the multidimensional fast Fourier transform of the small sub-blocks of input.

The fast multidimensional partial Fourier transform apparatus according to the present embodiment outperforms the conventional partial Fourier transform algorithm, improving the processing speed by up to 7.6 times without reducing the accuracy.

Second, the fast multidimensional partial Fourier transform apparatus according to the present embodiment automatically finds optimal hyperparameters, and computes the degree of the approximate polynomial. The hyperparameters are automatically selected without manual hyperparameter search through a convex optimization-based algorithm, so that the additional cost required for hyperparameter search is significantly reduced.

The optimal hyperparameter derived by the fast multidimensional partial Fourier transform apparatus according to the present embodiment is a value that minimizes the time complexity of the multidimensional partial Fourier transform operation. Although the constraint function of the optimization problem may not be represented in an explicit form, the fast multidimensional partial Fourier transform apparatus approximates the complex constraint function of the multidimensional partial Fourier transform by an unconstrained convex optimization problem by deriving the explicit reconstruction of the constraint function based on the Chebyshev polynomial approximation. Through this, the optimal hyperparameter may be efficiently found using numerical analysis such as Newton's method.

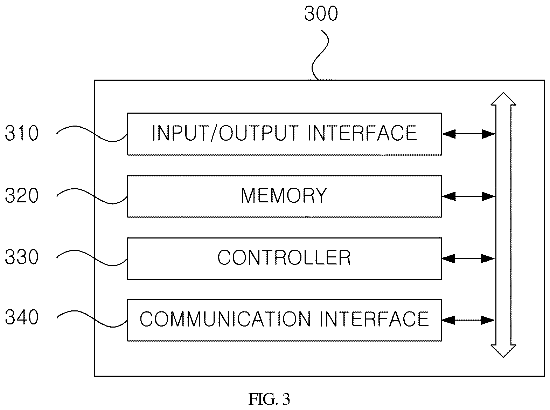

FIG. 3 is a block diagram illustrating the functional configuration of a fast multidimensional partial Fourier transform apparatus 300 according to an embodiment.

Referring to FIG. 3, the fast multidimensional partial Fourier transform apparatus 300 according to an embodiment may include an input/output interface 310, memory 320, a controller 330, and a communication interface 340. Some components may be omitted when necessary.

The input/output interface 310 may include an input interface configured to receive input from a user, and an output interface configured to display information such as the results of performance of tasks or the status of the fast multidimensional partial Fourier transform apparatus 300. That is, the input/output interface 310 is configured to receive data and output the results of an operation of the data. The fast multidimensional partial Fourier transform apparatus 300 according to the embodiment may receive a fast multidimensional partial Fourier transform request or the like through the input/output interface 310.

The memory 320 is configured to store files and programs, and may be constructed using various types of memory. In particular, the memory 320 may store data and a program that enable the controller 330, to be described below, to perform operations for a fast multidimensional partial Fourier transform according to an algorithm to be presented below.

The memory 320 may store a plurality of hyperparameters used for a partial Fourier transform. The memory 320 may store partial Fourier coefficients for multidimensional data computed based on a plurality of hyperparameters.

The controller 330 is configured to include at least one processor, such as a central processing unit (CPU), a graphics processing unit (GPU), or the like, and may control the overall operation of the fast multidimensional partial Fourier transform apparatus 300. That is, the controller 330 may control other components included in the fast multidimensional partial Fourier transform apparatus 300 to perform operations for a fast multidimensional partial Fourier transform. The controller 330 may perform operations for the approximation of multidimensional Fourier coefficients based on a fast multidimensional partial Fourier transform according to the algorithm to be presented below by executing the program stored in the memory 320.

The communication interface 340 may perform wired/wireless communication with another device or a network. For example, the communication interface 340 may receive a plurality of hyperparameters and transmit multidimensional Fourier coefficients.

To this end, the communication interface 340 may include a communication module configured to support at least one of various wired/wireless communication methods. The communication module may be implemented in the form of a chipset. The mobile or wireless communication supported by the communication interface 340 may be, for example, an N-generation mobile communication protocol, Wireless Fidelity (Wi-Fi), Wi-Fi Direct, Bluetooth, Ultra-Wide Band (UWB), or Near Field Communication (NFC).

The controller 330 automatically searches for an optimal hyperparameter for computing multidimensional Fourier coefficients. The controller 330 sets a plurality of hyperparameters used for partial Fourier transform based on constraints on the tolerance and degree of the polynomial for polynomial approximation.

The controller 330 defines the optimal hyperparameter as a value that minimizes the time complexity of the algorithm. The constraint function of this optimization problem may not be represented in an explicit form. The controller 330 reconstructs the constraint function through Chebyshev approximation to overcome this problem and derives an unconstrained convex optimization problem. Since this approach derives the convexity of an objective function, it may be possible to efficiently find the optimal hyperparameter using numerical analysis such as Newton's method. After finding an optimal solution that minimizes the objective function, the controller 330 may automatically derive an optimal hyperparameter by approximating the optimal hyperparameter using a specific function.

The controller 330 efficiently computes partial Fourier coefficients in a multidimensional partial Fourier transform. The controller 330 approximates and computes the multidimensional Fourier coefficients of a partial Fourier transform for multidimensional data based on a plurality of hyperparameters.

The controller 330 modifies the Cooley-Tukey algorithm to find a set of trigonometric functions with low oscillation in the multidimensional partial Fourier transform. Then, the controller 330 approximates the trigonometric functions using Chebyshev polynomials. This method decomposes the computation of the partial Fourier coefficients into matrix multiplication and multidimensional fast Fourier transform for the small sub-blocks of input, thereby significantly reducing the time cost.

The controller 330 distinguishes between a configuration phase and a computation phase to compute multidimensional partial Fourier transform coefficients at high speed. The controller 330 performs sequential tensor products with the input sub-blocks while performing multivariate Chebyshev polynomial approximation for the trigonometric functions of the partial Fourier transform in the configuration phase. Furthermore, the controller 330 automatically finds the optimal hyperparameter and computes the degree of the approximation polynomial. The controller 330 utilizes a batch matrix multiplication and fast Fourier transform algorithms optimized for multidimensional data types in the computation phase.

For a positive integer $v$, let $\omega_v := e^{-2\pi i/v}$ be the $v$-th primitive root of unity and $[v] := \{0, 1, \cdots, v - 1\}$. Given a D-dimensional array

$$\mathcal{A} = (a_n) \in \mathbb{C}^{N_1 \times \cdots \times N_D},$$

the partial Fourier transform of array $\mathcal{A}$ is represented by Equation 1 below:

$$\hat{a}_m = \sum_{n \in \prod_d [N_d]} a_n \prod_d \omega_{N_d}^{m_d n_d} \quad (1 \le d \le D) \tag{1}$$

where $n = (n_1, \cdots, n_D)$ and $m = (m_1, \cdots, m_D) \in \mathbb{Z}^D$ are input and output indices, respectively.

The controller 330 computes Fourier coefficients $\hat{a}_m$ for m belonging to multidimensional box $\mathcal{B}_{\mu,M}$. $\mathcal{B}_{\mu,M} := \prod_d$

$[\mu_d - M_d, \mu_d + M_d]$, where $\mu = (\mu_1, \cdots, \mu_D)$ and $M = (M_1, \cdots, M_D) \in \mathbb{Z}^D$ are the center and radii of the box, respectively. The multidimensional box is represented through a multidimensional matrix in multidimensional space. The multidimensional box $\mathcal{B}_{\mu,M}$ is called a "target range." It is assumed that for each d = 1, $\cdots$, D, $N_d = p_d q_d$, where $p_d$, $q_d > 1$. Let $p = (p_1, \cdots, p_D) \in \mathbb{Z}^D$ and $q = (q_1, \cdots, q_D) \in \mathbb{Z}^D$.

The controller 330 may decompose Equation 1 into Equation 2 using the Cooley-Tukey algorithm that recursively divides size *N* into two halves and divides and conquers until a signal of length 2 is obtained.

$$\hat{a}_m = \sum_{k,l} a_{q \odot k+1} \prod_d \omega_{N_d}^{m_d(q_d k_d + l_d)}$$

$$= \sum_{k,l} a_{q \odot k+1} \prod_d \omega_{N_d}^{m_d l_d} \omega_{p_d}^{m_d k_d} \qquad (2)$$

$n = q \odot k + 1$, where $k \in \Pi_d[p_d]$, $l \in \Pi_d[q_d]$, and $\odot$ is the element-wise product.

The controller 330 may convert Equation 2 into Equation 3 using $\omega_{N_d}^{m_d l_d} = \omega_{N_d}^{m_d(l_d - q_d/2)} \; \omega_{2p_d}^{m_d}$.

$$\hat{a}_m = \sum_{k,l} a_{q \odot k+1} \prod_d \omega_{N_d}^{m_d(l_d - q_d/2)} \omega_{p_d}^{m_d k_d} \omega_{2p_d}^{m_d} \qquad (3)$$

It is noted that $|l_d| < q_d$ and $|l_d - q_d/2| < q_d/2$, so that the twiddle factors $\left\{ \omega_{N_d}^{m_d(l_d - q_d/2)} \right\}$ is less oscillatory compared to $\left\{ \omega_{N_d}^{m_d l_d} \right\}$, which allows a more accurate approximation via polynomials.

To apply polynomial approximation for the set $\left\{ \omega_{N_d}^{m_d(l_d - q_d/2)} \right\}$, the controller 330 sets the following definitions. Let $\|\cdot\|_R$ be the uniform norm restricted to a set $R \subseteq \mathbb{R}$, that is, $\|f\|_R := \sup\{|f(x)| : x \in R\}$ and $P_\alpha$ be the set of polynomials on $\mathbb{R}$ of degree less than $\alpha$.

Given a positive integer $\alpha$ and a non-zero real number ç, the controller 330 defines $\mathcal{P}_{\alpha,\xi}$ as the best polynomial approximation to $e^{\pi i x}$ of degree less than $\alpha$ with the restriction $|x| \le |\xi|$:

$$\mathcal{P}_{\alpha,\xi} := \underset{P \in P_\alpha}{\operatorname{argmin}} \left\| P(x) - e^{\pi i x} \right\|_{|x| \le |\xi|}$$

where $\mathcal{P}_{\alpha,\xi} := 1$ when $\xi = 0$.

These polynomials have uniqueness and presence.

The controller 330 uses the Chebyshev approximation algorithm to compute the optimal polynomial approximation. The Chebyshev polynomials are used due to their solid theoretical foundations, including their widespread application in achieving optimal approximations with respect to the uniform norm and their contribution to the derivation of an error bound. When necessary, other types of orthogonal polynomials may be applied to improve accuracy and efficiency.

Given a tolerance $\varepsilon > 0$ and a positive integer r, the controller 330 defines $\xi(\varepsilon, r)$ to be the scope about the origin such that the exponential function $e^{\pi i x}$ may be approximated by a polynomial of degree less than r with approximation bound $\varepsilon$:

$$\xi(\epsilon, r) := \sup \left\{ \xi \ge 0 : \left\| \mathcal{P}_{r,\xi}(x) - e^{\pi i x} \right\|_{|x| \le |\xi|} \le \epsilon \right\}$$

The controller 330 represents the optimal polynomial as $\mathcal{P}_{r,\xi(\epsilon,r)}(x) = \sum_{j \in [r]} w_{\varepsilon,r,j} x^j$, where $w_{\varepsilon,r,j}$ is the *j*-th coefficient of the polynomial.

Given a tolerance $\varepsilon > 0$, the controller 330 may find a positive integer $r_d$ that satisfies $\xi(\varepsilon, r_d) \ge M_d/p_d$ for each *d*.

For $\mu_d - M_d \leq m_d \leq \mu_d + M_d$, the controller 330 decompose the twiddle factor $\omega_{N_d}^{m_d(l_d - q_d/2)}$ into $\omega_{N_d}^{m_d(l_d - q_d/2)} \omega_{N_d}^{(m_d - \mu_d)(l_d - q_d/2)}$ and approximates the second term by the polynomial $\mathcal{P}_{r_d, \xi(\epsilon, r_d)}$ (-2($m_d$ - $\mu_d$)($l_d$ - $q_d$/2)/$N_d$). Since $\xi(\varepsilon, r_d) \geq M_d/p_d$, the approximation is valid for all $m_d$ such that $|m_d - \mu_d| \leq \left| \frac{N_d}{2(l_d - q_d/2)} \cdot \frac{M_d}{p_d} \right| = \left| \frac{q_d}{2l_d - q_d} \cdot M_d \right|$. In particular, $|m_d - \mu_d| \leq M_d$.

The controller 330 may approximate Equation 3 by Equation 4.

$$\hat{a}_m \approx \sum_{j,k,l} a_l^{(k)} \prod_d b_{j_d l_d}^{(d)} \omega_{p_d}^{m_d k_d} \left( (m_d - \mu_d)/p_d \right)^{j_d} \omega_{2p_d}^{m_d} \qquad (4)$$

In this case, where $j \in \Pi_d[r_d]$, $k \in \Pi_d[p_d]$, $l \in \Pi_d[q_d]$,

$$\mathcal{A}^{(k)} := \left( a_l^{(k)} = a_{q \odot k + l} \right) \in \mathbb{C}^{q_1 \times \cdots \times q_D},$$

and

$$B^{(d)} := \left( b_{j_d l_d}^{(d)} = \omega_{N_d}^{\mu_d(l_d - q_d/2)} w_{\epsilon, r_d, j_d} (1 - 2l_d/q_d)^{j_d} \right) \in \mathbb{C}^{r_d \times q_d}$$

The controller 330 may write the innermost summation $\sum_l a_l^{(k)} \prod_d b_{j_d l_d}^{(d)}$ in Equation 4 as a sequential d-mode product as in Equation 5 below:

$$\mathcal{A}^{(k)} \times_1 B^1 \times_2 \cdots \times_D B^{(D)} \qquad (5)$$

A total of D! parenthesizations are required to compute Equation 5.

The controller 330 precomputes the optimal parenthesization in the configuration phase when $(N, M, \mu, \varepsilon)$ is given, so that the controller 330 can bypass the parenthesization problem in the computation phase.

The controller 330 may represent the results of Equation 5 by

$$\mathcal{C}^{(k)} := \left( c_j^{(k)} \right) \in \mathbb{C}^{r_1 \times \cdots \times r_D}.$$

The operation $\sum_k c_j^{(k)} \prod_d \omega_{p_d}^{m_d k_d}$ for each j is a D-dimensional partial Fourier transform having a size $\Pi_d p_d$. When $\hat{c}_m^{(j)}$ is the Fourier coefficient of $c_j^{(k)}$ for k, $\hat{a}_m$ may be estimated as in equation 6 below:

$$\hat{a}_m \approx \sum_j \hat{c}_m^{(j)} \prod_d \left( (m_d - \mu_d)/p_d \right)^{j_d} \omega_{2p_d}^{m_d} \qquad (6)$$

The controller 330 provides a convex optimization-based algorithm for selecting the optimal hyperparameter of a fast multidimensional partial Fourier transform. The controller 330 approximates a constraint function to transform the optimization problem (problem 1) of the fast multidimensional partial Fourier transform into the unconstrained convex optimization problem (problem 2).

The optimal hyperparameter minimizes the time complexity of the fast multidimensional partial Fourier transform. The controller 330 sets a time cost function. Since the configuration phase includes only data-independent processes, only the computation phase for the time cost is taken into consideration. For simplicity, the following notations are used: $N = \Pi_d N_d$, $M = \Pi_d M_d$, $p = \Pi_d p_d$, $q = \Pi_d q_d$, and $r = \Pi_d r_d$, where $d = 1, 2, \cdots, D$.

Without the loss of generality, the controller 330 assume that the optimal parenthesization is given in the order

$x_1, x_2, \cdots, x_D$, which requires $O(r_1 q_1 \cdots q_D + r_1 r_2 q_2 \cdots q_D + \cdots + r_1 \cdots r_D q_D)$ operations. Then, the total cost of computing $C^{(k)}$ for all $k$ is given by $O(pqr) = O(Nr)$.

$$p(r_1 q_1 \cdots q_D + r_1 r_2 q_2 \cdots q_D + \cdots + r_1 \cdots r_D q_D)$$

$$= p\left(\frac{qr}{r_2 \cdots r_D} + \frac{qr}{q_1 r_3 \cdots r_D} + \cdots + \frac{qr}{q_1 \cdots q_{D-1}}\right)$$

$$\le pqr\left(1 + \frac{1}{2} + \cdots \frac{1}{2}^{D-1}\right) < 2pqr$$

To compute $\hat{c}_m^{(j)}$ for $r_d \ge 1$ and $q_d \ge 2$, r fast Fourier transforms of size $p$ are performed, which takes $O(rp \log p)$ time. The remaining computation of Equation 6 requires $O(r)$ operations for each m, giving an $O(Mr)$ running time. Accordingly, the time cost required to compute the fast multidimensional partial Fourier transform is represented by Equation 7 below:

$$O((N + p \log p + M)r) \qquad (7)$$

Now, the objective function (Equation 7) for each dimension $d$ = 1, 2, ... , D is taken into consideration. $N_d$ and $M_d$ are the sizes of input and output, respectively, $p_d$ is a positive divisor of $N_d$, and $r_d$ is the number of approximation terms that varies with given tolerance $\varepsilon$. Since the variables $p_d$ and $r_d$ take discrete integer values, the continuous optimization method may not be used directly. The constraint that $p_d$ divides $N_d$ results in an irregular domain of $p_d$ depending on the value of $N_d$. To tackle these problems, the constraints are slightly relaxed to extend the domains of $p_d$ and $r_d$ to positive real numbers and remove the necessity that $p_d$ divides $N_d$. This leads to the following optimization problem. For brevity, the notations of the subscript d are omitted.

Given $N, M \in N$ and $\varepsilon > 0$, the optimization problem (problem 1) is represented as follows:

$$\underset{p, r > 0}{\operatorname{argmin}}(N + p \log p + M)r$$

$$s.t. \quad \xi(\epsilon, r) \ge M/p$$

Due to the function $\xi(\varepsilon, r)$, this optimization problem may not be represented in an explicit form. Accordingly, the controller 330 approximates the constraint function to reconstruct the optimization problem into an unconstrained convex optimization problem.

When the tolerance is $0 < \varepsilon < 1$, Equation 8 may be defined as follows:

$$r^* = \min\{r \in \mathbb{N} : \xi(\epsilon, r) \ge M/p\} \qquad (8)$$

$c = \xi(\varepsilon, r^*) \ge M/p$. The best polynomial approximation to $e^{c\pi ix}$ on $|x| \le 1$ (this is equivalent to approximating $e^{\pi ix}$ on $|x| \le c$) and its Taylor series $e^{c\pi ix} = \sum_{n \ge 0}(c\pi ix)^n/n!$ are taken into consideration.

For a non-negative integer $n$, the $n$-th power of $x$ may be written as follows:

$$x^n = \frac{1}{2^{n-1}}\left(T_n(x) + \binom{n}{1}T_{n-2}(x) + \binom{n}{2}T_{n-4}(x) + \cdots\right)$$

where $T_n(x)$ is the Chebyshev polynomial of degree $n$ (for even $n$, the coefficient of $T_0(x)$ is divided by 2). Then, the following equation is obtained:

$$e^{c\pi ix} = \sum_{n \ge 0}\frac{(c\pi ix)^n}{n!} = \sum_{n \ge 0}\frac{(c\pi ix)^n}{n!}\frac{1}{2^{n-1}}\sum_{k=0}^{\lfloor n/2 \rfloor}\binom{n}{k}T_{n-2k}(x)$$

When the $T_{n-2k}$ terms for $n - 2k \ge r$ is deleted, the Chebyshev approximation of degree less than r is derived. When $\eta(r)$ is the maximum error of the approximation, $\xi(\eta(r), r) = c$. Explicitly, this is represented, as follows:

$$\eta(r) := \max_{|x|\leq 1} \left| \sum_{n-2k \geq r} \frac{(c\pi i)^n}{n!} \frac{1}{2^{n-1}} \binom{n}{k} T_{n-2k}(x) \right|$$

When $n + 2k$ is substituted for $n$, the following equation is obtained:

$$\eta(r) = \max_{|x|\leq 1} \left| \sum_{n \geq r} \sum_{k \geq 0} 2i^n \left(\frac{c\pi}{2}\right)^{n+2k} \frac{(-1)^k}{k!(n+k)!} T_n(x) \right|$$

The controller 330 may express the involved terms using the Bessel function as $J_n(w) = \sum_{k \geq 0} \frac{(-1)^k}{k!(n+k)!} \left(\frac{w}{2}\right)^{n+2k}$, where $n$ is a non-negative integer and $w \in \mathbb{R}$, which implies $\eta(r) = \max_{|x|\leq 1} |\sum_{n \geq r} 2i^n J_n(c\pi) T_n(x)|$.

Now it is assumed that the number $r$ of approximating terms has a certain lower bound, namely $r \geq c\pi - 1$. The reason for this is that, given $w > 0$, the sequence $n \mapsto Jn(w)$ is strictly decreasing for $n \geq w - 1$ and converges to zero as $n$ tends to $\infty$.

Integer $v$ is $v \geq w - 1$, and $J_{v+1}(w) < j_v(w)$ holds. The reason for this is that the Bessel function satisfies the recurrence relation as in Equation 9 below:

$$J_n(w) = \frac{2(n+1)}{w} J_{n+1}(w) - J_{n+2}(w), \quad \forall n \geq 0 \qquad (9)$$

The condition $r \geq c\pi - 1$ ensures that the magnitude $|2i^n J_n(c\pi)|$ of coefficients in the Chebyshev approximation gap strictly decreases. Accordingly, the extreme points of the function $x \mapsto \sum_{n \geq r} 2i^n J_n(c\pi) T_n(x)$ may be estimated. The extreme points $x_k$ of the dominant term $T_r(x)$ are represented as follows:

$$xk = cos\left(\frac{k\pi}{r}\right), \quad k = 0, 1, \cdots, r$$

Furthermore, it is easy to determine that the magnitude of extrema of $\sum_{n \geq r} 2i^n J_n(c\pi) T_n(x)$ peaks at around $x = 0$, which implies $\eta(r) \approx \left| \sum_{n \geq r} 2i^n J_n(c\pi) T_n(x_{\lfloor r/2 \rfloor}) \right|$ or Equation 10 below. $T_n(cos\theta) = cos(n\theta)$ may be utilized.

$$\eta(r) \approx \begin{cases} |\sum_{n \geq r} 2i^n J_n(c\pi)\cos(\pi n/2)| & r: \text{even} \\ |\sum_{n \geq r} 2i^n J_n(c\pi)\cos(\pi n(r-1)/2r)| & r: \text{odd} \end{cases} \qquad (10)$$

It is assumed that $\eta(r)$ is an upper bound. The reason for this is that, when $r \geq 2$, the approximate error function $\eta(r)$ satisfies the following equation:

$$\eta(r) \leq U(r) := \frac{2\sqrt{17}}{4-\sqrt{e}} \frac{c^r}{r!} e^{-\frac{c^2}{r+1}} \quad (C = \frac{c\pi}{2})$$

Then, the relation between hyperparameters $p$ and $r$ may be derived using the upper bound.

It is assumed that integer $r_0 \geq 2$ satisfies the equation $U(r_0) = \varepsilon$. Then, the following equation is obtained:

$$\eta(r_0) \leq U(r_0) = \epsilon = \eta(r^*)$$

In this case, the last equality holds because $\xi(\varepsilon, r^*) = c = \xi(\eta(r^*), r^*)$. $\eta(r)$ is non-decreasing by definition, so that $r^* \leq r_0$. This means finding the solution to Equation 11 below:

$$U(r) = \epsilon \qquad (11)$$

Rounding down the solution $\hat{r} \in \mathbb{R}$ gives an estimate of $r^* \sim \lfloor \hat{r} \rfloor$. Equation 11 does not have an algebraic solution due to the presence of factorial term. To address this problem, an approximate solution of the equation is computed using the fixed-point iteration method. $U$ is considered to be a function of $C$ and an implicit expression of $r$ with respect to $C$ is found. By this technique, an approximate relation $p(r)$ which denotes the value of $p$ depending on $r$ may be derived.

When $\alpha = \frac{4-\sqrt{e}}{2\sqrt{17}}$ is assumed, Equation 11 is represented as follows:

$$\frac{c^r}{\alpha r!}e^{-\frac{c^2}{r+1}} = \epsilon \Leftrightarrow C^r = \alpha\epsilon r! \cdot e^{\frac{c^2}{r+1}} \Leftrightarrow C = (\alpha\epsilon r!)^{\frac{1}{r}}e^{\frac{c^2}{r(r+1)}}$$

For $x \in \mathbb{R}, f(x) := (\alpha\epsilon r!)^{\frac{1}{r}}e^{\frac{x^2}{r(r+1)}}$ may be defined, and the fixed point of $f$ may be computed. Since $f'(x) = \frac{(\alpha\epsilon r!)^{1/r}}{r(r+1)}2xe^{\frac{x^2}{r(r+1)}}$, $f(0)=0$. $f'(C) = \frac{2C}{r(r+1)}f(C) = \frac{2C^2}{r(r+1)}$ provides that C is a fixed point of $f$. $C \leq (r + 1)/2, r \geq 2$, and $f'(C) = \frac{2C^2}{r(r+1)} \leq \frac{(r+1)^2}{2r(r+1)} = \frac{r+1}{2r} \leq \frac{3}{4}$. $f'(x)$ is not decreasing for $x \geq 0$. There are $L < 1$ and $\delta > 0$ such that $|f'(x)| \leq L$ and $\forall x \in (-\delta, C+\delta)$. This means that $f$ is a contraction mapping function for $(-\delta, C+\delta)$. The fixed-point iteration is as follows.

$$C_0 \in (-\delta, C+\delta), C_{n+1} = f(C_n), \qquad n = 0,1,2,\cdots$$

The fixed-point iteration converges to the unique fixed point $C$ by the Banach fixed-point theorem. $C_0 = 0$ is set, and C is estimated by the result of the second iteration of the algorithm:

$$C \sim C_2 = f(f(0)) = f\left((\alpha\epsilon r!)^{\frac{1}{r}}\right) = (\alpha\epsilon r!)^{\frac{1}{r}}e^{\frac{c^2}{r(r+1)}(\alpha\epsilon r!)^{2/r}}$$

In Equation 8, $c \sim M/p$ is assumed according to the definition of $r^*$. This leads to the following approximation relation between hyperparameters $p$ and r:

$$p \sim \frac{M}{c} = \frac{\pi M}{2}C^{-1} \sim \frac{\pi M}{2}(\alpha\epsilon r!)^{-\frac{1}{r}}e^{-\frac{1}{r(r+1)}(\alpha\epsilon r!)^{2/r}}$$

In relation to the hyperparameter $r$, the hyperparameter $p$ may be represented as in Equation 12 below:

$$p(r) := \frac{\pi M}{2}(\alpha\epsilon r!)^{-\frac{1}{r}}e^{-\frac{1}{r(r+1)}(\alpha\epsilon r!)^{2/r}}, \qquad \alpha = \frac{4-\sqrt{e}}{2\sqrt{17}} \qquad (12)$$

By employing this relation, the objective function may be reduced into a functional form that depends only on $r$, thereby removing the inequality constraint.

Given $N, M \in \mathbb{N}$, and $\varepsilon > 0$, the unconstrained convex optimization problem (problem 2) is represented, as follows:

$$\arg\min_{r \geq 1}(N + p(r)\log p(r) + M)r$$

The objective function $r \mapsto (N + p(r)\log p(r) + M)r$ of problem 2 is convex for $r \geq 1$. Consequently, problem 2 becomes an unconstrained convex optimization problem.

The convexity of the objective function guarantees the convergence of second-order optimization techniques such as Newton's method. After the optimal solution $r^*$ that minimizes the objective function is found, the optimal $p^* = p(r^*)$ is approximated using the function $p(r)$, and the nearest divisor of $N$ to $p^*$ is selected. This may overcome the problem of manual hyperparameter selection.

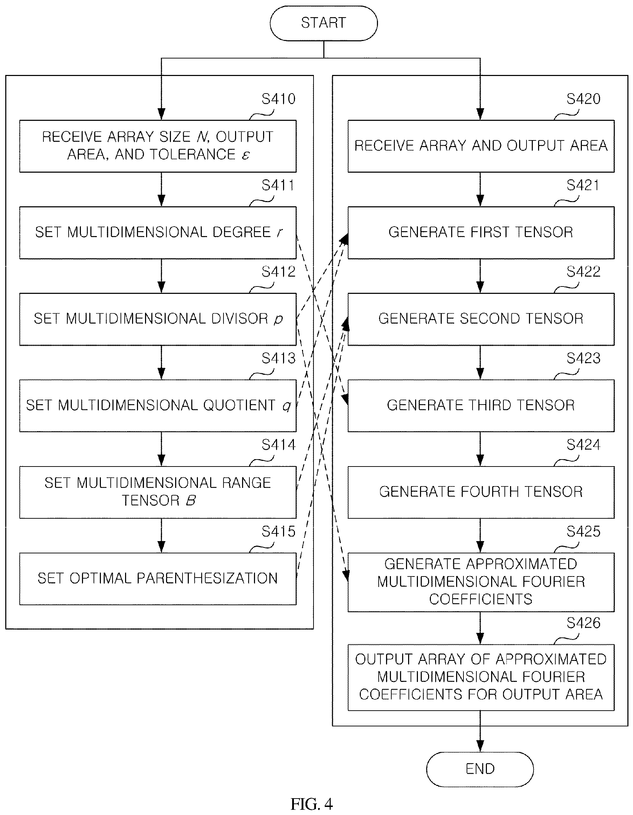

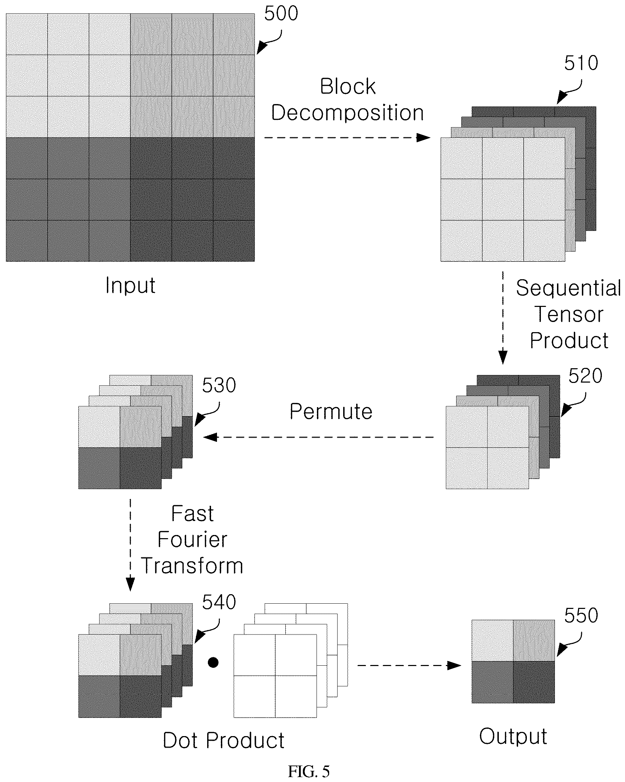

FIG. 4 is a flowchart illustrating the overall operation of a fast multidimensional partial Fourier transform apparatus according to an embodiment, and FIG. 5 is a diagram illustrating a tensor transformed by a fast multidimensional partial Fourier transform apparatus according to an embodiment.

The overall operation of the fast multidimensional partial Fourier transform apparatus is basically divided into a configuration phase and ae computation phase.

The configuration phase corresponds to the steps of setting some of hyperparameter optimization and necessary computation in advance after receiving information about input and output, and includes steps S410 to S415.

Steps S410 to S415 are the steps of setting a plurality of hyperparameters used in partial Fourier transform based on constraints on the tolerance and degree of the polynomial for polynomial approximation. The step of setting the plurality of hyperparameters may include the step of reconstructing the constraints (constraint functions) by approximating them and setting a plurality of hyperparameters through unconstrained convex optimization from the reconstructed constraints. In this case, the plurality of hyperparameters may include a multidimensional degree, a multidimensional divisor, a multidimensional quotient, a multidimensional range tensor, an optimal parenthesization, or a combination thereof.

In step S410, information about the size $N$ of an input array, an output area $M$ and $\mu$, and a tolerance $\varepsilon$ is received. In step S411, a multidimensional degree r is set using unconstrained convex optimization based on constraints. In step S412, a multidimensional divisor $p$ is set based on the size of an array, adapted to store multidimensional Fourier coefficients, and the multidimensional degree. In step S413, a multidimensional quotient $q$ is set based on the size of the array, adapted to store the multidimensional Fourier coefficients, and the multidimensional degree. In step S414, a multidimensional range tensor $B$ is set based on the size of the array adapted to store the multidimensional Fourier coefficients, the multidimensional degree, and a multidimensional quotient. In step S415, an optimal parenthesization is set for operations representing the multidimensional Fourier coefficients using the multidimensional range tensor.

Algorithm 1 for the configuration phase may be written in code as shown in Table 1.

Table 1

| **Algorithm 1** |
|---|
| **input** : Input size $N$, output descriptors $M$ and $\mu$, and tolerance $\epsilon$ <br> **output**: Configuration results $B^{(d)}, p_d, q_d, r_d$ for all $d$, and optimal parenthesization |
| 1 **for** $d = 1, 2, \cdots, D$ **do** <br> 2 $\quad$ Find the solution $r_d$ of Problem 2 by Newton's method <br> 3 $\quad$ Find the nearest divisor $p_d$ of $N_d$ to $p(r_d)$ <br> 4 $\quad$ $q_d \leftarrow N_d / p_d$ <br> 5 $\quad$ $r_d \leftarrow \lfloor r_d \rfloor$ <br> 6 $\quad$ $B^{(d)}[l,j] \leftarrow \omega_{N_d}^{\mu_d(l-q_d/2)} w_{\epsilon,r_d,j}(1-2l/q_d)^j$ <br> 7 **end** <br> 8 Find the optimal parenthesization |

The input of Algorithm 1 includes input size $N$, output area $M$ and $\mu$, and tolerance $\varepsilon$, and the output thereof includes tensor $B^{(d)}$ for dimension d, divisor $p_d$, quotient $q_d$, degree $r_d$, and optimal parenthesization.

The computation phase corresponds to the steps of sequentially undergoing block decomposition, sequential tensor multiplication, transposition, fast Fourier transform, and dot product operation processes and then outputting a Fourier coefficient array for a multidimensional domain, and includes steps S420 to S426.

Steps S420 to S426 are the steps of approximating and computing the multidimensional Fourier coefficients of a partial Fourier transform for multidimensional data based on a plurality of hyperparameters. The step of approximating and computing the multidimensional Fourier coefficients may include the step of performing a tensor transform based on multivariate polynomial approximation for multidimensional data using the multidimensional degree, the multidimensional divisor, the multidimensional quotient, the multidimensional range tensor, optimal parentheses, or a combination thereof and outputting approximated multidimensional Fourier coefficients.

When setting is completed in the configuration phase or preset hyperparameters are present, an arbitrary array 500 of size $N$ and an output area $M$ and $\mu$ are received in step S420. In step S421, a first tensor 510 is generated by performing block decomposition on the array 500 adapted to store multidimensional Fourier coefficients based on the multidimensional divisor and the multidimensional quotient. In step S422, the first tensor 510 and the multidimensional range tensor are converted into a second tensor 520 by performing sequential tensor product operations thereon based on the optimal parenthesization. In step S423, the second tensor 520 is converted into a third tensor 530 by permuting the second tensor 520 based on the multidimensional degree. In step S424, the third tensor 530 is converted into a fourth tensor 540 by applies a fast Fourier transform to the third tensor 530. In step S425, approximated multidimensional Fourier coefficients are generated by performing a dot product operation on the fourth tensor 540, to which the fast Fourier transform has been applied, based on the multidimensional divisor and the multidimensional output area. In step S426, an array 550 in which approximated multidimensional Fourier coefficients for the output area have been stored is output.

Algorithm 2 for the computation phase may be written in code as shown in Table 2.

Table 2

| Algorithm 2 |
| --- |
| **input** : Array $a$ of size $\prod_d N_d$, output descriptors $M$ and $\mu$, and configuration results in Algorithm 1 |
| **output** : Array $\hat{a}$ of Fourier coefficients of $a$ for $\mathcal{B}_{\mu,M}$ |
| 1  $A^{(k)}[l] \leftarrow a_{q \odot k + l}$ for $k \in \prod_d [p_d]$ and $l \in \prod_d [q_d]$ |
| 2  $C^{(k)} \leftarrow A^{(k)} \times_1 B^{(1)} \times_2 \cdots \times_D B^{(D)}$ for $k \in \prod_d [p_d]$ |
| 3  $\hat{C}^{(j)}[\cdot] \leftarrow \mathsf{FFT}(C^{(\cdot)}[j])$ for $j \in \prod_d [r_d]$ |
| 4  **for** $m \in \mathcal{B}_{\mu,M}$ **do** |
| 5  $\quad \hat{a}[m] \leftarrow \sum_j \hat{C}^{(j)}[m] \prod_d ((m_d - \mu_d)/p_d)^{j_d} \omega_{2p_d}^{m_d}$ |
| 6  **end** |

The input of algorithm 2 includes an array of size $\Pi_d N_d$, an output area $M$ and $\mu$, and the output results of algorithm 1, and the output thereof includes an array $\hat{a}$ in which the Fourier coefficients of $a$ for the output range $\mu$ and $M$ have been stored.

An algorithm for fast multidimensional partial Fourier transform according to the present embodiment may include algorithm 1 and algorithm 2, and may be referred to as "automatic multidimensional partial Fourier transform (Auto-MPFT)."

The algorithm for fast multidimensional partial Fourier transform (Auto-MPFT) has three major advantages.

First, Auto-MPFT minimizes the time complexity of the fast multidimensional partial Fourier transform by using an optimal hyperparameter.

Second, Auto-MPFT is space-optimized based on the sum of the sizes of input and output, so that it requires only the minimum space. By employing the optimal hyperparameter, the space complexity has an asymptotic upper bound $O(N + M)$ according to $O(\Sigma_d r_d q_d + N + pr + M) = O(N + M)$.

Third, Auto-MPFT provides a theoretical bound on the approximation of polynomials. Given a sufficiently small tolerance $\varepsilon > 0$, the estimated Fourier coefficients of Equation 4 satisfy the following.

$$\| \hat{a} - \mathcal{E}(\hat{a}) \|_{\mathcal{B}_{\mu,M}} \leq \| a \|_1 \cdot (2D - 1)\epsilon$$

By appropriately adjusting the tolerance, Fourier coefficients may be computed with arbitrary numerical precision using Auto-MPFT.

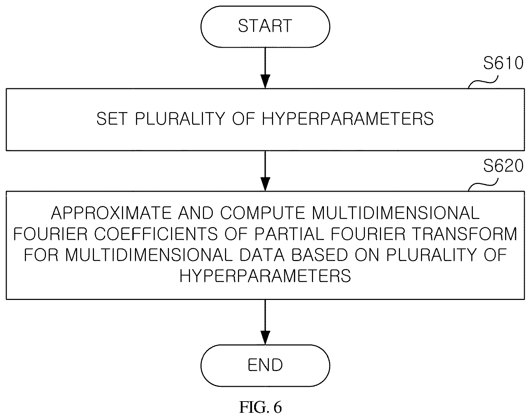

FIGS. 6 to 8 are flowcharts showing a fast multidimensional partial Fourier transform method according to an embodiment.

The fast multidimensional partial Fourier transform method according to the embodiment shown in FIGS. 6 to 8 includes the steps that are processed in a time-series manner by the fast multidimensional partial Fourier transform apparatus shown in FIGS. 1 to 5. Accordingly, the descriptions that are omitted below but have been given above in conjunction with the fast multidimensional partial Fourier transform apparatus shown in FIGS. 1 to 5 may also be applied to the fast multidimensional partial Fourier transform method according to the embodiment shown in FIGS. 6 to 8.

Referring to FIG. 6, in step S610, the fast multidimensional partial Fourier transform apparatus sets a plurality of hyperparameters used in partial Fourier transform based on constraints on the tolerance and degree of the polynomial for polynomial approximation.

In step S620, the fast multidimensional partial Fourier transform apparatus approximates and computes the multidimensional Fourier coefficients of partial Fourier transform for multidimensional data based on the plurality of hyperparameters.

The plurality of hyperparameters may include a multidimensional degree, a multidimensional divisor, a multidimensional quotient, a multidimensional range tensor, an optimal parenthesization, or a combination thereof.

Step S610 of setting the plurality of hyperparameters may include the step of reconstructing constraints by approximating them and setting a plurality of hyperparameters through unconstrained convex optimization from the reconstructed constraints.

Step S610 of setting a plurality of hyperparameters may include the step of setting a multidimensional degree, a multidimensional divisor, a multidimensional quotient, a multidimensional range tensor, an optimal parenthesization, or a combination thereof based on the constraints.

Step S620 of approximating and computing multidimensional Fourier coefficients may include the step of performing tensor conversion based on multivariate polynomial approximation for multidimensional data using a multidimensional degree, a multidimensional divisor, a multidimensional quotient, a multidimensional range tensor, an optimal parenthesization, or a combination thereof and then outputting approximated multidimensional Fourier coefficients.

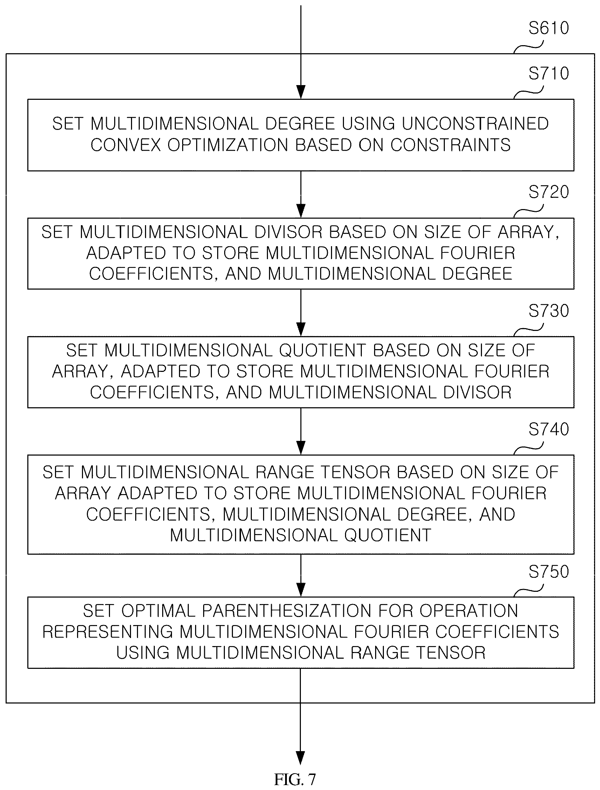

Referring to FIG. 7, step S610 of setting a plurality of hyperparameters may include step S710 of setting a multidimensional degree using unconstrained convex optimization based on the constraints, step S720 of setting a multidimensional divisor based on the size of an array adapted to store multidimensional Fourier coefficients and the multidimensional degree, step S730 of setting a multidimensional quotient based on the size of the array adapted to store multidimensional Fourier coefficients and the multidimensional divisor, step S740 of setting a multidimensional range tensor based on the size of the array adapted to store multidimensional Fourier coefficients, the multidimensional degree, and the multidimensional quotient, and step S750 of setting an optimal parenthesization for an operation representing multidimensional Fourier coefficients using the multidimensional range tensor.

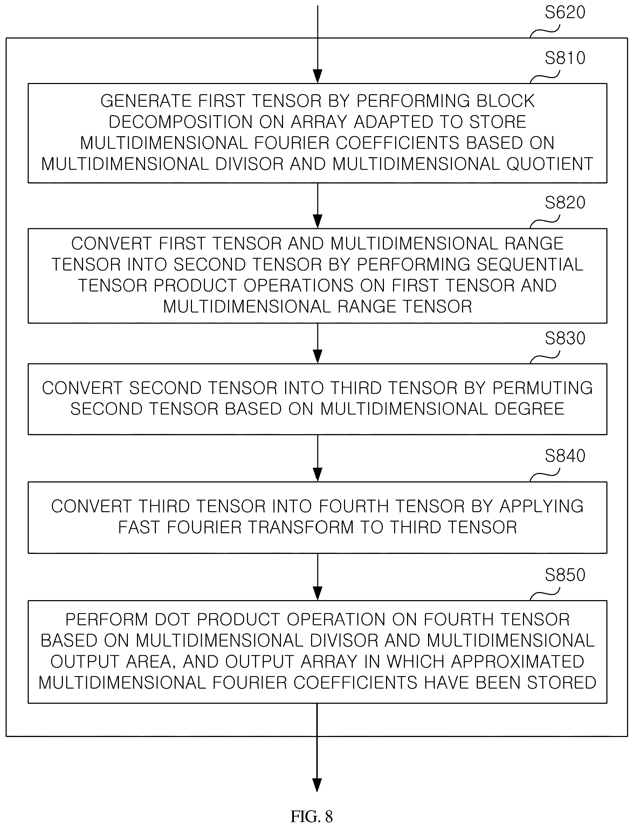

Referring to FIG. 8, step S620 of approximating and computing multidimensional Fourier coefficients may include step S810 of generating a first tensor by performing block decomposition on an array adapted to store multidimensional Fourier coefficients based on the multidimensional divisor and the multidimensional quotient, step S820 of converting the first tensor and the multidimensional range tensor into a second tensor by performing sequential tensor product operations thereon based on the optimal parenthesization, step S830 of converting the second tensor into a third tensor by permuting the second tensor based on the multidimensional degree, step S840 of converting the third tensor into a fourth tensor by applying a fast Fourier transform to the third tensor, and step S850 of performing a dot product operation on the fourth tensor, to which the fast Fourier transform has been applied, based on the multidimensional divisor and the multidimensional output area and then outputting an array in which approximated multidimensional Fourier coefficients have been stored.

According to the present embodiment, partial Fourier coefficients may be automatically and efficiently computed from multidimensional data.

According to the present embodiment, the computational cost may be significantly reduced by efficiently approximating the trigonometric factors of multidimensional data through multivariate polynomial approximation. This maximizes performance by effectively utilizing tensor multiplication and multidimensional fast Fourier transform when processing multidimensional data.

According to the present embodiment, optimal performance may be maintained without the manual adjustment of a user by introducing an unconstrained convex optimization algorithm that automatically selects hyperparameters. This optimization algorithm enables the explicit reconstruction of a complex constraint function through the Chebyshev approximation, thereby ensuring efficient convergence using Newton's method.

The present embodiment provides a speed up to 7.6 times faster than the conventional partial Fourier transform while maintaining accuracy, and significantly reduces additional costs attributable to hyperparameter search.

The present embodiment may be utilized in the field of digital signal processing that requires frequency domain processing for multidimensional data. The present embodiment efficiently processes multidimensional data and automatically adjusts hyperparameters, so that the efficiency of data processing can be significantly improved, with the result that the present invention may be applied to the artificial intelligence and machine learning industries that require the real-time processing of large-scale data. Furthermore, the present invention may be utilized in various cutting-edge technology fields such as data center operation, cloud computing, real-time streaming services, geographic information systems, and autonomous vehicles. As methodologies that utilize fast Fourier transform for fast learning, inference and computation in the field of machine learning increase, the present embodiment may be utilized in a spectral analysis technique configured to increase the efficiency of a convolutional neural network (CNN), which is widely used in visual image analysis, and reduce the total amount of computation.

The term "unit" used in the above-described embodiments means software or a hardware component such as a field-programmable gate array (FPGA) or application-specific integrated circuit (ASIC), and a "unit" performs a specific role. However, a "unit" is not limited to software or hardware. A "unit" may be configured to be present in an addressable storage medium, and also may be configured to run one or more processors. Accordingly, as an example, a "unit" includes components, such as software components, object-oriented software components, class components and task components, processes, functions, attributes, procedures, subroutines, segments in program code, drivers, firmware, microcode, circuits, data, a database, data structures, tables, arrays, and variables.

Components and a function provided in "unit(s)" may be coupled to a smaller number of components and "unit(s)" or divided into a larger number of components and "unit(s)."

In addition, components and "unit(s)" may be implemented to run one or more central processing units (CPUs) in a device or secure multimedia card.

The fast multidimensional partial Fourier transform method according to an embodiment described through the present specification may be implemented in the form of a computer-readable medium that stores instructions and data that can be executed by a computer. In this case, the instructions and the data may be stored in the form of program code, and may generate a predetermined program module and perform a predetermined operation when executed by a processor. Furthermore, the computer-readable medium may be any type of available medium that can be accessed by a computer, and may include volatile, non-volatile, separable and non-separable media. Furthermore, the computer-readable medium may be a computer storage medium. The computer storage medium may include all volatile, non-volatile, separable and non-separable media that store information, such as computer-readable instructions, a data structure, a program module, or other data, and that are implemented using any method or technology. For example, the computer storage medium may be a magnetic storage medium such as an HDD, an SSD, or the like, an optical storage medium such as a CD, a DVD, a Blu-ray disk or the like, or memory included in a server that can be accessed over a network.

Furthermore, the fast multidimensional partial Fourier transform method according to an embodiment described through the present specification may be implemented as a computer program (or a computer program product) including computer-executable instructions. The computer program includes programmable machine instructions that are processed by a processor, and may be implemented as a high-level programming language, an object-oriented programming language, an assembly language, a machine language, or the like. Furthermore, the computer program may be stored in a tangible computer-readable storage medium (for example, memory, a hard disk, a magnetic/optical medium, a solid-state drive (SSD), or the like).

Accordingly, the fast multidimensional partial Fourier transform method according to an embodiment described through the present specification may be implemented in such a manner that the above-described computer program is executed by a computing apparatus. The computing apparatus may include at least some of a processor, memory, a storage device, a high-speed interface connected to memory and a high-speed expansion port, and a low-speed interface connected to a low-speed bus and a storage device. These individual components are connected using various buses, and may be mounted on a common motherboard or using another appropriate method.

In this case, the processor may process instructions within a computing apparatus. An example of the instructions is instructions which are stored in memory or a storage device in order to display graphic information for providing a Graphic User Interface (GUI) onto an external input/output device, such as a display connected to a high-speed interface. As another embodiment, a plurality of processors and/or a plurality of buses may be appropriately used along with a plurality of pieces of memory. Furthermore, the processor may be implemented as a chipset composed of chips including a plurality of independent analog and/or digital processors.

Furthermore, the memory stores information within the computing device. As an example, the memory may include a volatile memory unit or a set of the volatile memory units. As another example, the memory may include a non-volatile memory unit or a set of the non-volatile memory units. Furthermore, the memory may be another type of computer-readable medium, such as a magnetic or optical disk.

In addition, the storage device may provide a large storage space to the computing device. The storage device may be a computer-readable medium, or may be a configuration including such a computer-readable medium. For example, the storage device may also include devices within a storage area network (SAN) or other elements, and may be a floppy disk device, a hard disk device, an optical disk device, a tape device, flash memory, or a similar semiconductor memory device or array.

The above-described embodiments are intended for illustrative purposes. It will be understood that those having ordinary knowledge in the art to which the present invention pertains can easily make modifications and variations without changing the technical spirit and essential features of the present invention. Therefore, the above-described embodiments are illustrative and are not limitative in all aspects. For example, each component described as being in a single form may be practiced in a distributed form. In the same manner, components described as being in a distributed form may be practiced in an integrated form.

The scope of protection pursued through the present specification should be defined by the attached claims, rather than the detailed description. All modifications and variations which can be derived from the meanings, scopes and equivalents of the claims should be construed as falling within the scope of the present invention.

## Claims

1. A fast multidimensional partial Fourier transform method, the fast multidimensional partial Fourier transform method being performed by a fast multidimensional partial Fourier transform apparatus, the fast multidimensional partial Fourier transform method comprising:

   setting a plurality of hyperparameters used in partial Fourier transform based on constraints on a tolerance and degree of a polynomial for polynomial approximation; and

   approximating and computing multidimensional Fourier coefficients of a partial Fourier transform for multidimensional data based on the plurality of hyperparameters.

2. The fast multidimensional partial Fourier transform method of claim 1, wherein setting the plurality of hyperparameters comprises reconstructing the constraints by approximating them and setting the plurality of hyperparameters through unconstrained convex optimization from the reconstructed constraints.

3. The fast multidimensional partial Fourier transform method of claim 1, wherein the plurality of hyperparameters comprise a multidimensional degree, a multidimensional divisor, a multidimensional quotient, a multidimensional range tensor, an optimal parenthesization, or a combination thereof.

4. The fast multidimensional partial Fourier transform method of claim 3, wherein setting the plurality of hyperparameters comprises setting the multidimensional degree, the multidimensional divisor, the multidimensional quotient, the multidimensional range tensor, the optimal parenthesization, or a combination thereof based on the constraints.

5. The fast multidimensional partial Fourier transform method of claim 3, wherein setting the plurality of hyperparameters comprises:

   setting the multidimensional degree using unconstrained convex optimization based on the constraints;

   setting the multidimensional divisor based on a size of an array, adapted to store the multidimensional Fourier coefficients, and the multidimensional degree;

   setting the multidimensional quotient based on the size of the array, adapted to store the multidimensional Fourier coefficients, and the multidimensional divisor;

   setting the multidimensional range tensor based on the size of the array adapted to store the multidimensional Fourier coefficients, the multidimensional degree, and the multidimensional quotient; and

   setting the optimal parenthesization for an operation representing the multidimensional Fourier coefficients using the multidimensional range tensor.

6. The fast multidimensional partial Fourier transform method of claim 3, wherein approximating and computing the multidimensional Fourier coefficients comprises performing tensor conversion based on a multivariate polynomial approximation on the multidimensional data using the multidimensional degree, the multidimensional divisor, the multidimensional quotient, the multidimensional range tensor, the optimal parenthesization, or a combination thereof, and outputting the approximated multidimensional Fourier coefficients.

7. The fast multidimensional partial Fourier transform method of claim 3, wherein approximating and computing the multidimensional Fourier coefficients comprises:

   generating a first tensor by performing block decomposition on an array adapted to store the multidimensional Fourier coefficients based on the multidimensional divisor and the multidimensional quotient;

   converting the first tensor and the multidimensional range tensor into a second tensor by performing sequential tensor product operations on the first tensor and the multidimensional range tensor based on the optimal parenthesization;

   converting the second tensor into a third tensor by permuting the second tensor based on the multidimensional degree;

converting the third tensor into a fourth tensor by applying a fast Fourier transform to the third tensor; and performing a dot product operation on the fourth tensor, to which the fast Fourier transform has been applied, based on the multidimensional divisor and a multidimensional output area, and outputting an array in which the approximated multidimensional Fourier coefficients have been stored.

8. A fast multidimensional partial Fourier transform apparatus, comprising a controller configured to set a plurality of hyperparameters used in partial Fourier transform based on constraints on a tolerance and degree of a polynomial for polynomial approximation and approximate and compute multidimensional Fourier coefficients of a partial Fourier transform for multidimensional data based on the plurality of hyperparameters.

9. A non-transitory computer-readable storage medium having stored thereon a program that, when executed by a processor, causes the processor to execute the fast multidimensional partial Fourier transform method set forth in claim 1.

10. A computer program that is executed by a fast multidimensional partial Fourier transform apparatus and stored in a non-transitory computer-readable storage medium to perform the fast multidimensional partial Fourier transform method set forth in claim 1.

111    112    113

121    122    123

FIG. 1

FIG. 2

EP 4 679 297 A1

300

INPUT/OUTPUT INTERFACE — 310

MEMORY — 320

CONTROLLER — 330

COMMUNICATION INTERFACE — 340

FIG. 3

20

START

S410
RECEIVE ARRAY SIZE *N*, OUTPUT AREA, AND TOLERANCE $\varepsilon$

S411
SET MULTIDIMENSIONAL DEGREE *r*

S412
SET MULTIDIMENSIONAL DIVISOR *p*

S413
SET MULTIDIMENSIONAL QUOTIENT *q*

S414
SET MULTIDIMENSIONAL RANGE TENSOR *B*

S415
SET OPTIMAL PARENTHESIZATION

S420
RECEIVE ARRAY AND OUTPUT AREA

S421
GENERATE FIRST TENSOR

S422
GENERATE SECOND TENSOR

S423
GENERATE THIRD TENSOR

S424
GENERATE FOURTH TENSOR

S425
GENERATE APPROXIMATED MULTIDIMENSIONAL FOURIER COEFFICIENTS

S426
OUTPUT ARRAY OF APPROXIMATED MULTIDIMENSIONAL FOURIER COEFFICIENTS FOR OUTPUT AREA

END

FIG. 4

FIG. 5

START

S610

SET PLURALITY OF HYPERPARAMETERS

S620

APPROXIMATE AND COMPUTE MULTIDIMENSIONAL
FOURIER COEFFICIENTS OF PARTIAL FOURIER TRANSFORM
FOR MULTIDIMENSIONAL DATA BASED ON PLURALITY OF
HYPERPARAMETERS

END

FIG. 6

S610

S710

SET MULTIDIMENSIONAL DEGREE USING UNCONSTRAINED
CONVEX OPTIMIZATION BASED ON CONSTRAINTS

S720

SET MULTIDIMENSIONAL DIVISOR BASED ON SIZE OF ARRAY,
ADAPTED TO STORE MULTIDIMENSIONAL FOURIER
COEFFICIENTS, AND MULTIDIMENSIONAL DEGREE

S730

SET MULTIDIMENSIONAL QUOTIENT BASED ON SIZE OF
ARRAY, ADAPTED TO STORE MULTIDIMENSIONAL FOURIER
COEFFICIENTS, AND MULTIDIMENSIONAL DIVISOR

S740

SET MULTIDIMENSIONAL RANGE TENSOR BASED ON SIZE OF
ARRAY ADAPTED TO STORE MULTIDIMENSIONAL FOURIER
COEFFICIENTS, MULTIDIMENSIONAL DEGREE, AND
MULTIDIMENSIONAL QUOTIENT

S750

SET OPTIMAL PARENTHESIZATION FOR OPERATION
REPRESENTING MULTIDIMENSIONAL FOURIER COEFFICIENTS
USING MULTIDIMENSIONAL RANGE TENSOR

FIG. 7

S620

S810

GENERATE FIRST TENSOR BY PERFORMING BLOCK DECOMPOSITION ON ARRAY ADAPTED TO STORE MULTIDIMENSIONAL FOURIER COEFFICIENTS BASED ON MULTIDIMENSIONAL DIVISOR AND MULTIDIMENSIONAL QUOTIENT

S820

CONVERT FIRST TENSOR AND MULTIDIMENSIONAL RANGE TENSOR INTO SECOND TENSOR BY PERFORMING SEQUENTIAL TENSOR PRODUCT OPERATIONS ON FIRST TENSOR AND MULTIDIMENSIONAL RANGE TENSOR

S830

CONVERT SECOND TENSOR INTO THIRD TENSOR BY PERMUTING SECOND TENSOR BASED ON MULTIDIMENSIONAL DEGREE

S840

CONVERT THIRD TENSOR INTO FOURTH TENSOR BY APPLYING FAST FOURIER TRANSFORM TO THIRD TENSOR

S850

PERFORM DOT PRODUCT OPERATION ON FOURTH TENSOR BASED ON MULTIDIMENSIONAL DIVISOR AND MULTIDIMENSIONAL OUTPUT AREA, AND OUTPUT ARRAY IN WHICH APPROXIMATED MULTIDIMENSIONAL FOURIER COEFFICIENTS HAVE BEEN STORED

FIG. 8

Europäisches
Patentamt
European
Patent Office
Office européen
des brevets

# EUROPEAN SEARCH REPORT

**Application Number**

EP 24 21 0469

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PARK YONG-CHAN ET AL: "Fast Multidimensional Partial Fourier Transform with Automatic Hyperparameter Selection", PROCEEDINGS OF THE 30TH ACM SIGKDD CONFERENCE ON KNOWLEDGE DISCOVERY AND DATA MINING, 1 January 2024 (2024-01-01), pages 2328-2339, XP093258162, ISBN: 979-8-4007-0490-1 Retrieved from the Internet: URL:https://openreview.net/forum?id=K8GSJv 8rxO&referrer=%5Bthe%20profile%20of%20Jong jin%20Kim%5D(%2Fprofile%3Fid%3D~Jongjin_Ki m1) [retrieved on 2025-03-11] * Title and keywords; page 1; claim 1 * * section 4.1, Machine; page 7; claims 1, 10 * * abstract; claim 1 * * algorithms 1 & 2; page 4; claims 1-7 * * Definition 3.2; text right below; page 4; claim 1 * * section 4.1, Machine & Baselines; page 7; claims 8, 10 * | 1-10 | INV. G06F17/14 |
| | ----- | | |
| | | | TECHNICAL FIELDS SEARCHED (IPC) |
| | | | G06F |

The present search report has been drawn up for all claims

| Place of search | Date of completion of the search | Examiner |
|---|---|---|
| The Hague | 20 March 2025 | Karaliolios, N |

EPO FORM 1503 03.82 (P04C01)

**REFERENCES CITED IN THE DESCRIPTION**

**Patent documents cited in the description**

- KR 100592753
- KR 102514264

- KR 101297085

**Non-patent literature cited in the description**

- **YONG-CHAN PARK et al.** *Fast Partial Fourier Transform*, 28 August 2020, https://arxiv.org/abs/2008.12559